# EUROPEAN PATENT APPLICATION

(11) **EP 4 776 591 A1**
(43) Date of publication of application: **15.07.2026**
(21) Application number: 25151156.4
(22) Date of filing: 10.01.2025
(51) Int. Cl.: H04L 45/02, H04L 45/28, H04L 43/0805, H04L 43/16, H04L 41/082

(54) **NETWORK NODE, COMMUNICATION NETWORK, METHOD, AND COMPUTER PROGRAM**

(71) Applicant: Deutsche Telekom AG, 53113 Bonn (DE)
(72) Inventor: BRITSCH, Matthias, 53639 Königswinter (DE); RASS, Jörg, 50859 Köln (DE); SCHATZMAYR, Rainer, 53229 Bonn (DE); BREITBACH, Johannes Markus, 53227 Bonn (DE)
(74) Representative: 2SPL Patentanwälte PartG mbB

(57) **Abstract**

The present disclosure relates to a first network node in a communication network. The first network node comprises processing circuitry configured to receive a status update message from a second network node in the communication network. The processing circuitry is further configured to decide whether to forward the status update message to at least one third network node in the communication network based on at least one forwarding criterium. The processing circuitry is further configured to decide whether to process the status update message based on at least one processing criterium.

## Description

### Field

The present disclosure relates to a network node, a communication network, a method, and a computer program.

### Background

Today's routing algorithms for packet-based networks may be modeled according to demands of existing network infrastructure. Physical network infrastructures may be based on electrical, optical, or microwave transmission links which may be predominantly installed at fixed locations. Thus, the according network infrastructure and the resulting network topologies may be fixed, as well. Changes in the topology may occur as a result of failure, for both internal and external reasons and as a consequence of administrative actions.

Routing algorithms for fixed topology networks may be designed to exchange state information and create a topological view of the network in each network node which may have to take routing decisions, so each node may forward the packet along an ideal path to the destination. To create and maintain that functionality also in case of failures or changes, network nodes (e.g., routers) propagate changes in their status or in the status of the links attached to them throughout the network. For that purpose, numerous protocols have been devised and some of them are in widespread use, such as OSPF (open shortest path first) or IS-IS (intermediate system to intermediate system).

There may be a demand for improved management of status update messages in dynamic networks.

### Summary

This demand may be satisfied by the subject-matter of the independent claims. Further aspects are set forth in the dependent claims, the drawings, and the following description.

The present disclosure is based on the finding that for aerial-based or orbital-based networks (or a combination thereof), the situation may be different than for networks at fixed locations. For example, due to the physical properties of the platforms, the network infrastructure created by links between these platforms may be in constant change, because of several factors, such as:
- Distances between nodes may change, causing changes in link performance and error rate
- Nodes may change their position relative to each other due to navigation decisions and/or orbital mechanics
- Atmospheric phenomena may render links unusable, e.g. due to cloud coverage, rain-storms, microturbulences in the (higher) atmosphere, or the like

This may result in an increased number of status update messages which may have to be propagated through the network at all times. As a result, for networks of a non-trivial size, the number of status update messages may be too high to allow the nodes to finalize processing of one message before further messages are received. This may result in the nodes not being able to create a valid routing information and in turn a valid forwarding information base, effectively disabling the routing. In case overload protection mechanisms (policies) would prevent the nodes' control plane from collapsing, invalid forwarding information would be applied to outgoing packets and the packets would be eventually dropped.

Furthermore, if status change information is to be distributed to all network nodes performing routing tasks, the amount of update information relative to payload information may increase with the number of network nodes (e.g., in a quadratic manner). This may decrease efficiency of the network. Moreover, with topology detection mechanisms making use of actively probing network state, as used by some ad-hoc network protocols, this problem may be even more severe.

In the present disclosure, principles are discussed that may limit the processing and forwarding of status update messages to the parts of the network impacted by the status change triggering each message, hence mitigating the impact of the number of messages, which may be caused by the physical properties of the platforms hosting the network nodes. This may be done by defining a set of algorithms allowing the network nodes to decide how individual messages may be forwarded and processed at each network node.

According to the present disclosure, the principles discussed herein may be combined with existing routing protocols, such as OSPF or IS-IS, e.g., by extending the respective protocols with the ruleset enabling them to handle status update messages according to the present disclosure.

According to a first aspect, the present disclosure relates to a first network node in a communication network. The first network node comprises processing circuitry configured to receive a status update message from a second network node in the communication network. The processing circuitry is further configured to decide whether to forward the status update message to at least one third network node in the communication network based on at least one forwarding criterium. The processing circuitry is further configured to decide whether to process the status update message based on at least one processing criterium.

Thereby a load of the node and of the network may be managed and, if necessary, decreased.

In some examples, the at least one forwarding criterium is that a number of network nodes that already obtained the status update message is below a predetermined threshold.

Thereby, it may be ensured that the right (and enough) network nodes receive the status update message.

In some examples, the at least one forwarding criterium is that a number of network nodes that already obtained the status update message exceeds a first predetermined threshold, and that a load of a link between the first network node and the at least one third network node is below a second predetermined threshold.

Thereby, the message may be forwarded, if the link is not overloaded, but the message may be dropped, if the link is overloaded. Thus, a dynamic management of message forwarding may be established.

In some examples, the at least one processing criterium is that a number of network nodes that already obtained the status update message is below a predetermined threshold.

Thereby, it may be ensured that the right (and enough) network nodes can process the status update message.

In some examples, the at least one processing criterium is that a number of network nodes that already obtained the status update message exceeds a first predetermined threshold, and that at load of the first network node is below a second predetermined threshold. Thereby, it may be ensured that the first network node has enough capacity to also process other tasks.

In some examples, it is decided to forward and process the status update message, if the status update message comprises a mandatory flag.

Thereby, distribution of changes in the network topology may be sped up.

In some examples, it is decided to process the status update message, if the first network node executes a failsafe function.

Thereby, route propagation may be sped up and safeguard against propagation gaps may be provided.

In some examples, it is decided to forward and process the status update message during an initial deployment phase of the first network node.

Thereby, a quick way of (re)initializing the network may be provided.

In some examples, at least one of the decisions is based on a number of third network nodes.

Thereby, the network topology may be taken into account.

In some examples, the number of third network nodes is two or less, the processing circuitry is configured to add a (e.g., serial) flag to the status update message, thereby indicating that the first network node is a serially connected network node.

Thereby, it may be ensured that the status update message arrives at a multiconnected node and that an alternative path for data may be provided.

In some examples, if the first network node is a serially connected network node, the processing circuitry is further configured to decide to forward the status update message to the at least one third network node and decide to process the status update message.

Thereby, it may be ensured that the status update message arrives at a multiconnected node and that an alternative path for data may be provided.

In some examples, the processing circuitry is further configured to decide not to process the status update message, if the status update message was previously already obtained by the first network node.

Thereby, processing and forwarding loops may be avoided.

In some examples, the processing circuitry is further configured to prioritize at least one of processing and forwarding of a status update message of a plurality of status update messages based on a message length of the status update message.

Thereby, a selected subset of messages may be forwarded and/or processed.

In some examples, the processing circuitry is further configured to aggregate, for a predetermined amount of time, a plurality of status update messages before deciding on at least one of the forwarding and the processing.

Thereby, status update messages that are collected during the amount of time may be prioritized and a load of the network may be reduced.

In some examples, at least one of the first, the second, and the at least one third network node is a communication satellite.

Thus, the present disclosure may be applied to dynamically changing network topologies.

In some examples, the communication network is based on a dynamically changing network topology.

Thereby, similar effects as described in relation to the first aspect may be achieved.

According to a second aspect, the present disclosure provides a communication network comprising a first network node according the first aspect or according to any example relating to the first aspect, and the at least one third network node.

Thereby, similar effects as described in relation to the first aspect may be achieved.

According to a third aspect, the present disclosure relates to a method for a first network node in a communication network. The method comprises receiving a status update message from a second network node in the communication network. The method further comprises deciding whether to forward the status update message to at least one third network node in the communication network based on at least one forwarding criterium. The method further comprises deciding whether to process the status update message based on at least one processing criterium.

Thereby, similar effects as described in relation to the first aspect may be achieved.

According to a fourth aspect, the present disclosure provides a computer program comprising instructions which, when the computer program is executed on a computer (or any other machine or circuitry that may be configured to execute such instructions such as dedicated hardware), causes the computer (or any other machine or circuitry) to carry out the method according to the third aspect.

According to a fifth aspect, the present disclosure provides a non-transitory machine-readable medium comprising instructions which, when the instructions are carried out on a computer, cause the computer to carry out the method according to the third aspect.

### Brief description of the Figures

Some examples of apparatuses and/or methods will be described in the following by way of example only, and with reference to the accompanying figures, in which
Fig. 1 depicts a communication network according to the present disclosure;
Fig. 2 depicts a flowchart of a method according to the present disclosure; and
Fig. 3 depicts a communication network according to the present disclosure.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

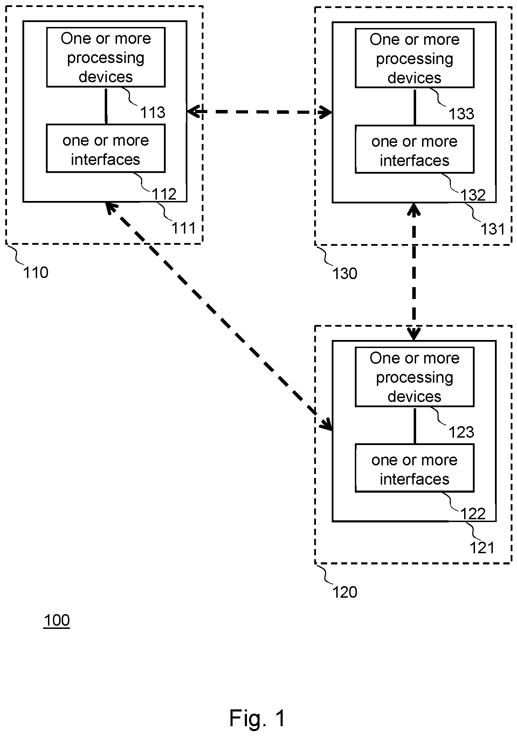

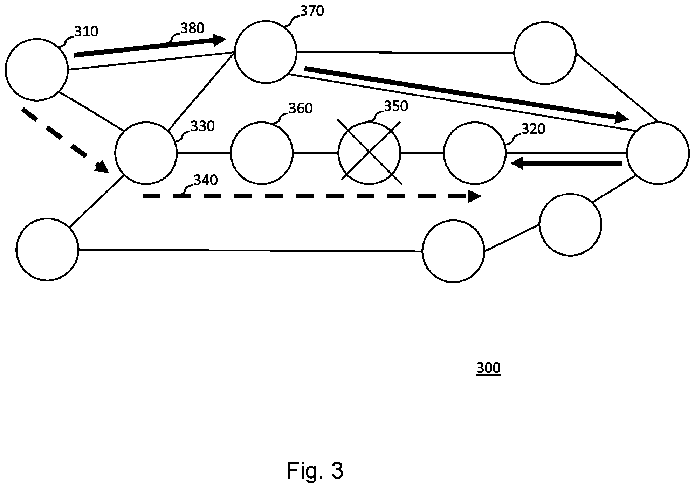

Fig. 1 depicts a block diagram of a communication system/network 100 including a plurality of network nodes 110, 120, and 130, without limiting the present disclosure to a number or type of network nodes. The present disclosure may pertain to a network with a plurality of network nodes between which a plurality of different paths (connections/links) may (theoretically) exist (as depicted in Fig. 3) and principles are discussed to find an alternative path, if a (standard) path is corrupted or not available. However, the principles of the present disclosure may already be applicable to a network with three nodes, such as the network 100 depicted under reference of Fig. 1. As shown in Fig. 1, the nodes 110, 120, and 130 are interconnected and it may in principle be possible that each node directly communicates with each other. However, for the sake of briefly explaining the present disclosure, it shall be assumed that node 110 is configured to communicate with node 120 via node 130 (e.g., for security reasons). If node 130 is down, node 110 may receive from node 120 (or may determine by itself) that node 130 is down. Then, node 110 may be configured to decide to use the direct link to node 120 to communicate the message. Moreover, node 110 may be configured to determine whether any other network node in the network (not depicted) should be informed of the circumstance that node 130 is down, as will be explained in the following.

In the case of (many) more network nodes, there may be approaches to forward a status update message (i.e., that node 130 is down) to every node in the whole communication network. Depending on the number of network nodes, such an approach may cause an amount of traffic which may scale up with the number of network nodes (e.g., in a quadratic manner, depending on the network topology), thereby potentially overloading the network since too much bandwidth might be consumed.

The present disclosure is based on the finding that it might not be necessary to forward the status update message to each node in the network. It has further been recognized that it might not even be necessary to process the status update message by a respective node.

Therefore, according to the present disclosure, each network node that receives a status update message is configured to decide whether to forward the message and further (independently) configured to decide whether to process the status update message. Thereby, network traffic may be drastically decreased if a change of network topology occurs (i.e., if a node is down or currently unavailable or corrupted). Thereby, it may be possible to handle dynamicity in (routed) networks. Thus, in some examples, the communication network may be based on a (dynamically) changing network topology, without limiting the present disclosure in that regard, as the present disclosure may also be applicable in a static topology.

There may be several reasons that a node is unavailable. For example, if one or more satellites are involved as network nodes in the network (e.g., among terrestrial nodes), there may be instances that a satellite may not be reached, e.g., due to weather conditions, due to celestial conditions (e.g., a sun storm), or the like. In that case, the satellite may temporarily not be part of the network. On the other hand, a satellite may collide with space debris, be hit by a meteorite, have mechanical or electrical failure, or the like, and may thus be severely damaged and then not be part of the network anymore. If the network node that is unavailable is a terrestrial node, such as a base station, there may be different reasons why the terrestrial node is unavailable. In some examples, the unavailable node is a repeater, a user equipment, a core network, a radio access network, or the like. In general, the network may be a homogeneous network (i.e., all the nodes are of the same type) or a heterogeneous network (i.e., at least one node is of a different type than all the other nodes), such that there may be different protocols applied between the different network nodes to communicate with each other and to determine whether a node is available or not. For the sake of explanation, it is assumed that network nodes 110 and 120 are terrestrial nodes and network node 130 is a communication satellite.

In the following, the terms "first network node", "second network node"; and "at least one third network node" are used. In Fig. 1, the network node 110 constitutes the first network node, and the network node 120 constitutes the second network node. The at least one third network node is not depicted in Fig. 1, but will be further discussed under reference of Fig. 3.

The first network node 110 includes circuitry 111, e.g. including one or more interfaces 112, which are configured to communicate in the network 100. The one or more interfaces 112 are coupled to one or more processing devices (also referred to as processing circuitry in the present disclosure) 113, which are configured to perform one of the principles and methods described herein.

Similarly, the second network node 120 of the mobile communication system 100 may include circuitry 121 including one or more interfaces 122, which may be configured to communicate in the communication network 100. The one or more interfaces 122 are coupled to one or more processing devices 123.

The third network node 130 may include circuitry 131 including one or more interfaces 132, which may be configured to communicate in the mobile communication system 100. The one or more interfaces 132 may be coupled to one or more processing devices 133, which are configured to connect to the first network node 110 and/or to the second network node 120.

As illustrated in Fig. 1, the respective one or more processing devices (or circuitry) 113, 123, and 133 are coupled to the respective one or more interfaces 112, 122, and 132, but the connection depicted in Fig. 1 should be not understood as limiting. The one or more interfaces 112, 122, and 132 may correspond to one or more inputs and/or outputs for receiving and/or transmitting information, which may be in digital (bit) values according to a specified code or protocol, within a module, between modules or between modules of different entities. For example, an interface 112, 122, and/or 132 may comprise interface circuitry configured to receive and/or transmit information/data. In examples, an interface 112, 122, 132 may correspond to any means for obtaining, receiving, transmitting or providing analog or digital signals or information, e.g., any connector, contact, pin, register, input port, output port, conductor, lane, etc., which allows providing or obtaining a signal or information. An interface 112, 122, 132 may be configured to communicate (transmit, receive, or both) in a wireless or wireline manner and it may be configured to communicate, i.e., transmit and/or receive signals, information with further internal or external components. The one or more interfaces 112, 122, 132 may comprise further components to enable communication in a (mobile) communication system or network, such components may include transceiver (transmitter and/or receiver) components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, one or more antennae, one or more optical lenses, etc.

The one or more processing devices (or processing circuitry) 113, 123, 133 may be implemented using one or more processing units, one or more circuitries, any means for processing, such as a processor, a computer or a programmable hardware component being operable with accordingly adapted software. In other words, the described function of the one or more processing devices 113, 123, 133 may as well be implemented in software, which is then executed on one or more programmable hardware components. Such hardware components may comprise a general-purpose processor, a Digital Signal Processor (DSP), a micro-controller, a computer, a processor, a control unit, a (field) programmable logic array ((F)PLA), a (field) programmable gate array ((F)PGA), a graphics processing unit (GPU), a central processing unit (CPU), a neural processing unit (NPU), an application-specific integrated circuit (ASIC), an integrated circuit (IC), a system-on-a-chip (SoC) system, or the like.

A network node according to the present disclosure may be located in the fixed or stationary part of the network or system. If the network node is fixed (and not a satellite), a network node may correspond to a remote radio head, a transmission point, an access point, a macro cell, a small cell, a micro cell, a pico cell, a femto cell, a metro cell etc. The term small cell may refer to any cell smaller than a macro cell, e.g., a micro cell, a pico cell, a femto cell, or a metro cell. Moreover, a femto cell is considered smaller than a pico cell, which is considered smaller than a micro cell. A network entity can be a wireless interface of a wired network, which enables transmission and reception of radio signals to a communication device. Such a radio signal may comply with radio signals as, for example, standardized by 3GPP or, generally, in line with one or more of the above listed systems. Thus, a network entity or a base station may correspond to, a NodeB, an eNodeB, a gNodeB, a BTS (Base Transceiver Station), an access point, etc.

The communication network 100 may be a routed network and/or a cellular. The term cell may refer to a coverage area of radio services provided by a transmission point, a remote unit, a remote head, a re-mote radio head, communication device, network entity or a NodeB, an eNodeB, a gNodeB, respectively. The terms cell and base station may be used synonymously, a base station may generate multiple (at least one) cells. A wireless communication device, can be registered or associated with at least one cell, e.g., it can be associated to a cell such that data can be exchanged between the network and the mobile in the coverage area of the associated cell using a dedicated channel, connection or link. However, also computing networks, such as Wide Area Networks, Local Area Networks, the Internet, or the like shall be understood as communication networks according to the present disclosure.

For example, the mobile communication system may, for example, correspond to one of the Third Generation Partnership Project (3GPP)-standardized mobile communication networks, where the term mobile communication system is used synonymously to mobile communication network. The mobile communication system may correspond to, for example, a 6th Generation system (6G), a 5th Generation system (5G), a New Radio (NR) system, a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

Depending on a role that a network node may take, it may be the first network node, the second network node, or the at least one third network node. According to the present disclosure, the second network node may have the role of sending a status update message (pertaining to a node that is down) to the first network node. The first network node may have the role of receiving the status update message and deciding what to do with the status update message, e.g., deciding whether to process the status update message, and deciding whether to forward the status update message to the at least one third network node.

Returning to Fig. 1, the processing circuitry 113 of the first network node 110 is configured to receive a status update message from the second network node 120 in the communication network 100.

The status update message may include an indication that the network topology has changed, e.g., due to a node being down, corrupted, temporarily not available, or the like, or a link being damaged, down, corrupted, or the like, such that a network node cannot be reached. The second network node 110 may originally generate the status update message or may be recipient of the status update message and forwards it to the first network node 110. Generally, each node may be configured to submit status update information in case it detects a change in the statuses of its own links. The present disclosure is not limited to any mechanism to monitor links and their states. For example, up or down state of interfaces may be reported by the physical layer implementation, based on heartbeat exchange (e.g. in form of bidirectional forwarding detection), traffic monitoring, pinging of remote interfaces, or the like.

The processing circuitry 113 is further configured to decide whether to forward the status update message to at least one third network node in the communication network based on at least one forwarding criterium.

A status update message may include routing information indicating which node shall receive the status update message. Routing information may be in the format of link state or distance vector information, that is, include for example zero, one or more I P addresses, subnet masks, metric combinations, host identifiers, or the like.

Additionally or alternatively, the status update (e.g., in the routing information) message may include link characteristics, such as bandwidth, QoS (quality of service) capabilities, buffer capacity, or the like.

Additionally or alternatively, the status update message may include a traversed nodes list (e.g., in the message header) in which every traversed node may enter its identity before forwarding. If the list has less entries a predetermined threshold, the message may be forwarded. In more general terms, in some examples, the at least one forwarding criterium is that a number of network nodes that already obtained the status update message is below (or equal to) a predetermined (forwarding) threshold. In such a case, the message may be forwarded to all or a subset of directly neighboring nodes with an active link (from a viewpoint of network topology).

However, according to the present disclosure, there may be cases where the message may be forwarded although the number of nodes already exceeded the (first) predetermined (forwarding) threshold. For example, the decision to forward the message may be based on available forwarding bandwidth resources. For example, if a load of a link between the first network node and the at least one third network node is below a second predetermined (forwarding) threshold, the message may be forwarded.

For example, the load may be defined based on a fixed bandwidth value (second predetermined threshold), e.g., created by any means during the planning, implementation or operations phase of the network 100, e.g., based on a (mathematical) analysis of network size, topology change rate, node performance, network mesh density, software limits or other network or network node properties.

For example, at least one of the following criteria may be considered as the second predetermined threshold:
- Capacity available in addition to payload traffic
- Percentage of status update traffic compared to overall traffic (e.g., statically configured or dynamically adjusted)
- Percentage of payload traffic compared to overall traffic
- Percentage of status update traffic (or payload traffic) compared to the capacity of a network link (or interface)
- Size or absolute fill level or fill rate of an incoming status update message buffer
- Algorithmically defined or redefined, such as at least one of the following:
   o Forward as long as bandwidth is available
   o Forward as long as capacity is available. If more than one message is scheduled for forwarding after the previous message is sent, messages may be dropped by an algorithmically defined pattern, e.g. reciprocal to the gradient of buffer usage (e.g. if buffer fills twice as fast as messages can be processed, every second message or more may be discarded)
   o Based on an analysis of message metadata (e.g., timestamp, incoming interface, or the like) and message content to determine a change rate prevalent at the message source and apply processing priority to incoming messages based on the change rate
   o Alignment with processing decisions
   o Any combination thereof

All these definitions may be applied to one or several links, including all active links, in any combination. Please note that neither values nor algorithms have to be unique for all nodes in the network.

The processing circuitry 113 is further configured decide whether to process the status update message based on at least one processing criterium.

Decision on processing and decision on forwarding may be independent of each other. For example, a message may be processed but not forwarded, or a message may be forwarded but not processed. On the other hand, it may be decided that the message is neither processed nor forwarded, or that both forwarding and processing may be applied. The processing may include that the first network node 110 enters itself in the traversed nodes list, for example. Also, any other change to the message may constitute the processing. However, it should be noted that a message may still be forwarded without processing, if the first network node 110 only reads and forwards the message without entering itself in the list, e.g., to determine who is the recipient of the message.

For example, the processing circuitry 113 may decide not to process (and/or not to forward) the status update message, if the status update message was previously already obtained by the first network node 110. The processing circuitry 113 may be configured to check the traversed nodes list and, in case it finds its own identity in the list, the message may be discarded to prevent routing loops.

Similarly as the forwarding criterium, in some examples, the at least one processing criterium is that a number of network nodes that already obtained the status update message is below a predetermined (processing) threshold. This predetermined processing threshold may be the same or may be different to the predetermined forwarding threshold.

Also, similarly as the forwarding criterium, in some examples, the at least one processing criterium is that a number of network nodes that already obtained the status update message exceeds a first predetermined (processing) threshold, and that at load of the first network node is below a second predetermined (processing) threshold.

The load may be defined in a similar way as for the forwarding, or it may be different. If it is not a fixed value, the processing decision threshold value may be changed during operations phase of the network, e.g. to adapt to changes in the network condition. For example, the load may be defined based on at least one of the following:
- Fixed value, created by any means during planning, implementation or operations phase of the network 100, including mathematical analysis of network size, topology change rate, node performance, network mesh density, software limits or other network or network node properties
- Size or absolute fill level or fill rate of the incoming status update message buffer.
- Load on the node, on links, interfaces processors (data and user plane) or any other performance relevant component
- Algorithmically defined or redefined, such as at least one of the following:
   o Process as long as capacity is available. If more than one message is in the status update input buffer after processing of the previous message is finalized, messages are processed based on their time of arrival. The messages that are not processed are discarded.
   o Process as long as capacity is available. If more than one message is in the status update input buffer after processing of the previous message is finalized, messages are dropped by an algorithmically defined pattern, e.g., reciprocal to the gradient of buffer usage (e.g. if buffer fills twice as fast as messages can be processed, every second message or more is discarded)
   o Processing based on message metadata (e.g., timestamp, incoming interface) and message content to analyze the change rate prevalent at the message source and apply processing priority to incoming messages based on the change rate
   o Any combination thereof

The processing load threshold may be the same or may be different for different nodes.

The processing circuitry 113 may further be configured to determined relevance of a status update. Relevance may depend on a number of alternative paths, the network 100 can provide between any pair of network nodes. How many alternative paths exist may depend on the number of active links a node has available to its nearest neighbors in any point of time.

For example, the node may be a multiconnected node (more than two direct neighbors) or a serially connected node (one or two direct neighbors).

In case of a multiconnected network node, alternative paths to a plurality of other nodes may exist. For multiconnected network nodes, the procedure upon receiving an update message may be as follows: if a status update message is received, the network node 110 may check the number of entries in the traversed nodes list to determine network nodes that already handled the message. The number of entries may be checked against its (dedicated) threshold value. If the number of entries is below the threshold, the message content may be evaluated and the routing and/or forwarding information base may be updated accordingly.

If the number of entries in the traversed node list is above the node's dedicated threshold and no additional processing criterium (as will be discussed below) and no exception (as will be discussed below) is met, the status update might not be processed.

If the message is processed, it may be determined whether to forward the message, as discussed above. The message may optionally aggregated with other information or augmented with additional information before forwarding. However, it should be noted that the present disclosure is not limited to the ordering that the forwarding follows the processing as these might be independent processes.

If the node 110 is a serially connected node, no alternative path may exist. In such as case, a lower threshold (e.g., for entries in the traversed node list) may be set for the node 110, which may define if the status update message is to be processed or not. If the number of entries is below the limit, the status information message may have to be processed by the node 110. Thereby, it may be ensured that the message eventually reaches a multiconnected node. The lower threshold may be node specific and either static or dynamic. The lower threshold may depend on at least one of the node's 110 position in the network topology, an analysis of the network topology, a network topology change rate, or any other parameter indicating the respective network node's relevance for alternative paths in the network.

In general terms, in some examples, at least one of the two decisions (processing and forwarding) depends on a number of third network nodes (i.e., if one or two first network nodes, the first network node is a serial node; and if more than two third network nodes, the first network node is a multiconnected node).

In some examples, if the number of third network nodes is two or less (i.e., if the first network node is a serial node), the processing circuitry 113 may be further configured to add a serial flag to the status update message, thereby indicating that the first network node 110 is a serially connected network node. For example, the serial flag may be added to the traversed nodes list when the first network node 110 puts its identity on the traversed nodes list. Such a flag may invalidate the entry in detection of the lower limit threshold value in all nodes processing the message.

In some examples, if the first network node is a serially connected network node, the processing circuitry 113 may be further configured to decide to forward the status update message to the at least one third network node and decide to process the status update message.

Thereby, it may be ensured that ensured that the message receives at least one multiconnected node.

If the number of links a network node can use changes, e.g. by establishing new links via radio or free space optical transmission or by manual configuration change (e.g., setting interfaces in "up mode") or by a loss of links, the node 110 may automatically and instantly change its behavior if this added or lost links changes the overall number of active links in either direction over the threshold.

In some examples, the processing circuitry 113 is further configured to aggregate, for a predetermined amount of time, a plurality of status update messages before deciding on at least one of the forwarding and the processing.

For example, to decrease the overall number of messages and hence the management traffic load on the network 100 and the processing load of the network nodes' 110 control plane processors, the node 110 may wait a configurable/predetermined amount of time before forwarding received messages, thus aggregating all messages received during this aggregation period, no matter if the message is to be processed or forwarded. This amount of time may be any positive, real, floating-point number, defining the waiting period in seconds (or fractions thereof), including zero (in which case the waiting functionality may be disabled). The aggregation period may be the same for all nodes in the network or may be different for at least one node in the network. It may be different for each active link. Furthermore, the amount of time may be dynamically adapted, e.g., based on overall traffic on each active link.

On the other hand, in some examples, the processing circuitry 113 is further configured to prioritize at least one of the processing and the forwarding of a status update message of a plurality of status update messages based on a message length of the status update message.

For example, a shorter status update message may be prioritized over a longer status update message since it may use less processing capacity than the longer message. On the other hand, the longer status update message may be prioritized for forwarding, if it has more (valuable) information. The shorter status update message may be prioritized for forwarding, if it is shorter because less nodes have received the status update message.

As indicated above, exceptions may exist according to which the message is processed and/ forwarded although it would be discarded according to the rules above. For example, it may be decided to forward the status update message, if the status update message comprises a mandatory flag. The mandatory flag (also referred to as validity wildcard flag) may indicate that it is mandatory to forward and/or process the message.

Thereby, distribution of changes in the network topology may be sped up. The mandatory flag may be used for status updates which must not be ignored, independent from the processing or forwarding decision threshold definition. In some examples, the mandatory flag is set to a status update message, but the present disclosure is not limited in that regard. Additionally or alternatively, the mandatory flag may be used for information with network wide relevance, e.g. in case of a new address range being made available through a network node. All messages with the mandatory flag may have to be selected for processing in the next selection round. They may be forwarded after or during a waiting period, depending on the network node's configuration.

In some examples, it is decided to process the status update message, if the first network node executes a failsafe function.

To speed up route propagation and provide safeguard against propagation gaps, the amount of messages processed and forwarded regardless of the respective decision criteria may not be cut back to zero, but to a percentage other than zero. This percentage may either be a dedicated value or the base value of the cut back function used for "Schwarzstart" and may be defined for processing and forwarding independently. On the other hand, the message may be discarded, if it is among the messages that are cut back.

In some examples it is decided to forward and process the status update message during an initial deployment phase of the first network node (also referred to as "Schwarzstart", "initial setup", "initialization", or the like). For initial deployment of the network (or in case of return from a network breakdown), e.g., due to power loss or software failure in all or a subset of nodes, the network may have to be (re)initialized. This may be done by suspending processing and forwarding decision criteria temporarily until routing information data is gathered. During this time period, messages may be processed and forwarded which in stable operation (outside this timeframe) would either not be processed or not forwarded or both. In such a case, the fastest way to (re)initialize the network (node(s)) may be to process all messages for a period of time regardless of the decision criteria and to forward all messages which are processed.

However, other approaches may also possible, such as at least one of the following:
- Processing all or a higher amount of messages by adapting the decision threshold definition for a period of time and after that time successively cutting back the percentage of messages processed
- Starting with a fixed valued and cutting back the amount of processed messages. The cut back rate may be configured in form of any function. The function may be based on time and number of messages, e.g. cutting back for X percent any Y seconds, cutting back to the percentage reciprocal to the percentage of messages which cause changes in the routing information base, cutting back to a fixed amount, or the like. The values may also be configured or dynamically calculated.

Not all processed messages may need to be forwarded. Specifically in case of (re)initializing one network node, this can be beneficial to avoid overload in other parts of the network.

Such procedures which may override other decision criteria may be applied by each network node independently, both by serially and multiconnected network nodes and may be applied in the same way as if a single node recovers from failure or is added to the network.

As indicated above, the principles of the present disclosure may be applied to IS-IS and/or OSPF. For upgrading IS-IS to the described functionality, the processing of routing and forwarding information base may be adapted according to the present disclosure. The propagation of information as described herein (network node identity, "serially connected network node flag"), etc., may be added to (or included in) Link State Packet Data Units (LSPDUs, LSPs) as used by IS-IS implementations. For that purpose, an additional Type Length Value field may be added to the payload. The data field format may be of any machine-readable type, including binary, unformatted text or structured data (such as XML, YAML, JSON, YANG, etc.). To apply the routing methods as described herein in an ISIS network, several options may exist, such as at least one of the following:
- The routing may be applied inside each L1 area separately. In this case the L1/L2 routers wipe the hop list and replace its content with their own identity for all incoming and outgoing status update messages
- The routing may be applied across all areas. In this case, both L1, L2 and L1/L2 routers may behave as described herein.

The entire network may be setup as one L1 area. In this case, all L2 routers may act as described herein.

For upgrading OSPF to the described functionality, the processing of routing and forwarding information base may be adapted according to the present disclosure. The propagation of information as described above (network node identity, "serially connected network node flag"), etc., may be added to OSPF's link state advertisement (LSA) messages. In database description (DD), link state update (LSU) and link state update acknowledgement (LSAck) packets, the information as described herein may be added as additional payload in the respective link state advertisement (LSA) block. OSPF may allow the propagation of incremental (comprising only the last changes) or complete status updates. The propagation of link state in highly dynamic topologies may be optimized and secured against state and topology data corruption by sending only complete updates. In terms of OSPF, exclusively DD based updates may be used and not LSUs which include only incremental changes. Information elements, methods and procedures of OSPF, including handling of metrics, ,ay be applied as is.

For node internal information handling, information representing the node's status and used by the routing functionality complementary to information received from other nodes, may be stored on the node in any machine-readable format, such as plain text, database, structured data format (such as XML, YAML, JSON, YANG, etc.). In case the node makes use of a YANG data model, according information may be attached in YANG format to the IETF model. The additional information may be attached in a dedicated node or distributed over existing nodes.

In terms of security, if an existing protocol such as ISIS or OSPF is used, the respective protocols security mechanisms may be used. In case a dedicated protocol format is used, all information sent over the network may optionally be encrypted or authenticated with encrypted hash values (watermarking) to prevent eavesdropping or tampering. To allow a flexible integration of network nodes, a certification agency hierarchy may be used.

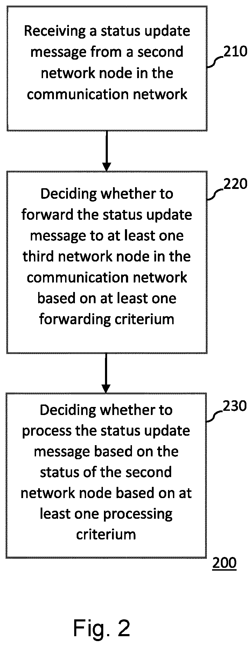

Fig. 2 depicts a flowchart of a method 200 according to the present disclosure. The method 200 includes receiving, 210, a status update message from a second network node in the communication network. The method 200 further includes deciding, 220, whether to forward the status update message to at least one third network node in the communication network based on at least one forwarding criterium. The method 200 further includes deciding, 230, whether to process the status update message based on at least one processing criterium.

Fig. 3 depicts a schematic diagram of a communication network 300 according to the present disclosure. The communication network 300 includes a plurality of multiconnected nodes and a plurality of serially connected nodes. In this case, the multiconnected node 310 intends to send data to the serially connected node 320. Usually, node 310 would use a path over node 330 to transmit the data, as indicated by dashed arrow 340. However, node 350 is temporarily not available, which is determined by node 360 based on a lack of a heartbeat message by node 350. Thus, node 360 generates a status update message indicating that its link to node 350 is not existing anymore (and thus, node 360 is an end node). The status update message is received by node 330 (as the first network node according to the present disclosure - thus, node 360 is the second network node according to the present disclosure). Node 330 decides whether to forward and whether to process the status update message according to the principles discussed herein. In this case, the decision for both is positive by node 330 and thus, the processed status update message is forwarded to all neighboring nodes (except node 360) including node 310 (as the at least one third network node). Then, node 310 uses a path via node 370, as indicated by arrow 380, to transmit the data to node 320.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. A first network node (110; 330) in a communication network (100; 300), the first network node (110; 330) comprising processing circuitry (113) configured to:
receive a status update message from a second network node (120; 360) in the communication network (100; 300);
decide whether to forward the status update message to at least one third network node (310; 370) in the communication network (100; 300) based on at least one forwarding criterium; and
decide whether to process the status update message based on at least one processing criterium.

2. The first network node (110; 330) of claim 1, wherein the at least one forwarding criterium is that a number of network nodes that already obtained the status update message is below a predetermined threshold.

3. The first network node (110; 330) of claim 1 or 2, wherein the at least one forwarding criterium is that a number of network nodes that already obtained the status update message exceeds a first predetermined threshold, and that a load of a link between the first network node (110; 330) and the at least one third network node (310; 370) is below a second predetermined threshold.

4. The first network node (110; 330) of any one of claims 1 to 3, wherein the at least one processing criterium is that a number of network nodes that already obtained the status update message is below a predetermined threshold.

5. The first network node (110; 330) of any one of claims 1 to 4, wherein the at least one processing criterium is that a number of network nodes that already obtained the status update message exceeds a first predetermined threshold, and that at load of the first network node (110; 330) is below a second predetermined threshold.

6. The first network node (110; 330) of any one of claims 1 to 5, wherein it is decided to forward and process the status update message, if the status update message comprises a mandatory flag.

7. The first network node (110; 330) of any one of claims 1 to 6, wherein it is decided to process the status update message, if the first network node (110; 330) executes a failsafe function.

8. The first network node (110; 330) of any one of claims 1 to 7, wherein it is decided to forward and process the status update message during an initial deployment phase of the first network node (110; 330).

9. The first network node (110; 330) of any one of claims 1 to 8, wherein at least one of the decisions is based on a number of third network nodes (310; 370).

10. The first network node (110; 330) of claim 9, wherein, if the number of third network nodes (310; 370) is two or less, the processing circuitry (113) is configured to add a serial flag to the status update message, thereby indicating that the first network node (110; 330) is a serially connected network node.

11. The first network node (110; 330) of claim 9 or 10, wherein, if the first network node is a serially connected network node, the processing circuitry (113) is further configured to:
decide to forward the status update message to the at least one third network node (310; 370); and
decide to process the status update message.

12. The first network node (110; 330) of any one of claims 1 to 11, wherein the processing circuitry (113) is further configured to prioritize at least one of processing and forwarding of a status update message of a plurality of status update messages based on a message length of the status update message.

13. The first network node (110; 330) of any one of claims 1 to 12, wherein the processing circuitry (113) is further configured to aggregate, for a predetermined amount of time, a plurality of status update messages before deciding on at least one of the forwarding and the processing.

14. A method (200) for a first network node (110; 330) in a communication network (100; 300), the method (200) comprising:
receiving a status update message from a second network node (120; 360) in the communication network (100; 300);
deciding whether to forward the status update message to at least one third network node (310; 370) in the communication network (100; 300) based on at least one forwarding criterium; and
deciding whether to process the status update message based on at least one processing criterium.

15. A computer program comprising instructions which, when the computer program is executed on a computer, causes the computer to carry out the method (200) of claim 14.

## Amended claims

### Amended claims in accordance with Rule 137(2) EPC.

1. A first network node (110; 330) in a communication network (100; 300), the first network node (110; 330) comprising processing circuitry (113) configured to:
receive a status update message from a second network node (120; 360) in the communication network (100; 300);
decide whether to forward the status update message to at least one third network node (310; 370) in the communication network (100; 300) based on at least one forwarding criterium; and
decide whether to process the status update message based on at least one processing criterium;
wherein at least one of the decisions is based on a number of third network nodes (310; 370).
wherein, if the number of third network nodes (310; 370) is two or less, the processing circuitry (113) is configured to add a serial flag to the status update message, thereby indicating that the first network node (110; 330) is a serially connected network node.

2. The first network node (110; 330) of claim 1, wherein the at least one forwarding criterium is that a number of network nodes that already obtained the status update message is below a predetermined threshold.

3. The first network node (110; 330) of claim 1, wherein the at least one forwarding criterium is that a number of network nodes that already obtained the status update message exceeds a first predetermined threshold, and that a load of a link between the first network node (110; 330) and the at least one third network node (310; 370) is below a second predetermined threshold.

4. The first network node (110; 330) of any one of claims 1 to 3, wherein the at least one processing criterium is that a number of network nodes that already obtained the status update message is below a predetermined threshold.

5. The first network node (110; 330) of any one of claims 1 to 3, wherein the at least one processing criterium is that a number of network nodes that already obtained the status update message exceeds a first predetermined threshold, and that at load of the first network node (110; 330) is below a second predetermined threshold.

6. The first network node (110; 330) of any one of claims 1 to 5, wherein it is decided to forward and process the status update message, if the status update message comprises a mandatory flag.

7. The first network node (110; 330) of any one of claims 1 to 6, wherein it is decided to process the status update message, if the first network node (110; 330) executes a failsafe function.

8. The first network node (110; 330) of any one of claims 1 to 5, wherein it is decided to forward and process the status update message during an initial deployment phase of the first network node (110; 330).

9. The first network node (110; 330) of one of the claims 1 to 8, wherein, if the first network node is a serially connected network node, the processing circuitry (113) is further configured to:
decide to forward the status update message to the at least one third network node (310; 370); and
decide to process the status update message.

10. The first network node (110; 330) of any one of claims 1 to 9, wherein the processing circuitry (113) is further configured to prioritize at least one of processing and forwarding of a status update message of a plurality of status update messages based on a message length of the status update message.

11. The first network node (110; 330) of any one of claims 1 to 10, wherein the processing circuitry (113) is further configured to aggregate, for a predetermined amount of time, a plurality of status update messages before deciding on at least one of the forwarding and the processing.

12. A method (200) for a first network node (110; 330) in a communication network (100; 300), the method (200) comprising:
receiving a status update message from a second network node (120; 360) in the communication network (100; 300);
deciding whether to forward the status update message to at least one third network node (310; 370) in the communication network (100; 300) based on at least one forwarding criterium; and
deciding whether to process the status update message based on at least one processing criterium,
wherein at least one of the decisions is based on a number of third network nodes (310; 370), wherein, if the number of third network nodes (310; 370) is two or less, the method (200) comprises adding a serial flag to the status update message, thereby indicating that the first network node (110; 330) is a serially connected network node.

13. A computer program comprising instructions which, when the computer program is executed on a computer, causes the computer to carry out the method (200) of claim 12.
